# EUROPEAN PATENT SPECIFICATION

(11) **EP 1 553 294 B1**
(45) Date of publication and mention of the grant of the patent: **22.05.2013**
(21) Application number: 05000068.6
(22) Date of filing: 04.01.2005
(51) Int. Cl.: F04B 35/04, F04B 39/12

(54) **Linear compressor**
Linearkompressor
Compresseur Linéaire

(30) Priority: 06.01.2004 KR 2004000647
(43) Date of publication of application: 13.07.2005
(73) Proprietor: LG Electronics, Inc., Seoul 150-010 (KR)
(72) Inventor: Park, Jong Jin, Namdong-ku Inchun-si 405-245 (KR); Park, Joon Woo, Youngdeungpo-ku Seoul 156-096 (KR)
(74) Representative: Urner, Peter

(56) References cited:
- EP-A1- 0 745 773
- JP-A- 2002 115 653
- US-A- 3 385 542
- US-A- 3 573 514
- US-A1- 2001 015 068
- US-A1- 2002 028 143

## Description

### BACKGROUND OF THE INVENTION

### Field of the Invention

The present invention relates to a linear compressor, and more particularly to a linear compressor wherein specific components are disposed outside a hermetically sealed container so as to reduce the size of the hermetically sealed container, whereby a linear compressor is miniaturized.

### Description of the Related Art

Generally, a linear compressor is constructed such that a linear driving force from a linear motor is transmitted to a piston, which is linearly reciprocated in a cylinder, whereby a fluid is introduced, compressed, and discharged.

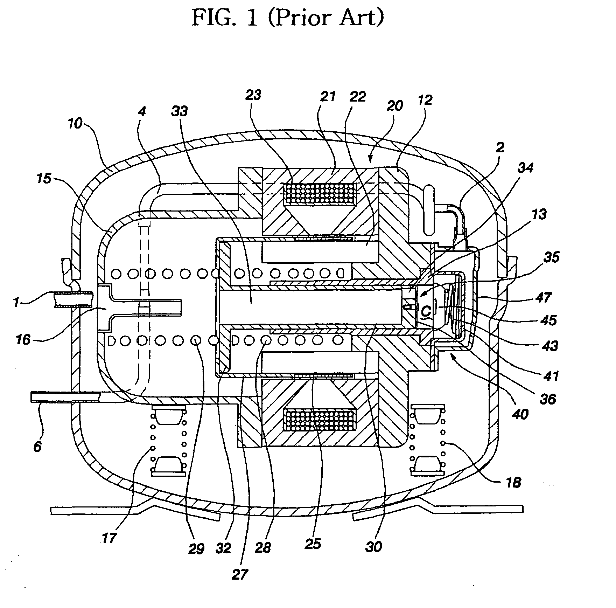

Fig. 1 is a longitudinal sectional view showing a conventional linear compressor. As shown in Fig. 1, the conventional linear compressor comprises a cylinder block 12 and a back cover 15 mounted inside a hermetically sealed container 10. The cylinder block 12 has a cylinder 13 formed therein, and the back cover 15 has a fluid inlet port 16 formed therein. The cylinder block 12 and the back cover 15 are disposed in the hermetically sealed container 10 in such a manner that shocks applied to the cylinder block 12 and the back cover 15 are absorbed by means of a first damper 17 and a second damper 18, respectively.

Between the cylinder block 12 and the back cover 15 is disposed a linear motor 20 that generates a driving force which is necessary to compress a fluid. To the linear motor 20 is connected a piston 30 that is linearly reciprocated in the cylinder 13 to compress a fluid introduced into the cylinder 13.

The linear motor 20 comprises a stator and a mover. The stator comprises: a laminated outer core 21; a laminated inner core 22 disposed such that the inner core 22 is spaced apart from the outer core 21 by a prescribed distance; and a coil 23 wound on the outer core 21 for generating a magnetic field.

The mover comprises: a magnet 25 disposed between the outer core 21 and the inner core 22 such that the magnet 25 is linearly moved by a magnetic force of the coil 23; and a magnet frame 27 connected to the piston 30 for transmitting a linear moving force to the piston. The magnet 25 is fixed to the magnet frame 27.

The piston 30 is provided at the rear part thereof with a flange 32, which is fixed to the magnet frame 27. The piston 30 is elastically supported by means of a first spring 28 disposed between the flange 32 and the cylinder block 12 and a second spring 28 disposed between the flange 32 and the back cover 15.

The piston 30 has a fluid flow channel 33 formed therein. The front end of the piston 30 is closed. At the closed front end of the piston are formed a plurality of inlet holes 34. In front of the piston 30 is disposed an inlet valve 35 that opens and closes the inlet holes 34. The inlet valve 35 has a valve plate 36 that is fixed to the piston 30 by means of a bolt. The valve plate 36 is elastically bent on the basis of the difference in pressure at both sides thereof for opening or closing the inlet holes 34.

A discharging unit 40 comprises: an inner outlet cover 41 mounted to the cylinder block 12 in front of a compression chamber C of the cylinder 13, the inner outlet cover 41 having a fluid outlet hole formed at one side thereof; a valve body 45 supported against the inner outlet cover 41 by means of a spring 43 for opening and closing the compression chamber C of the cylinder 13; and an outer outlet cover 47 disposed at the outside of the inner outlet cover 41 such that a predetermined space is defined between the inner outlet cover 41 and the outer outlet cover 47.

In Fig. 1, reference numeral 1 indicates an inlet connection pipe connected to the hermetically sealed container 10 while penetrating the hermetically sealed container 10 such that a fluid is introduced into the hermetically sealed container 10 through the inlet connection pipe, reference numeral 2 indicates an outlet pipe connected to the outer outlet cover 47 of the discharging unit 40 such that a fluid having passed through the discharging unit 40 is discharged through the outlet pipe, reference numeral 4 indicates a loop pipe having one end connected to the outlet pipe 4, and reference numeral 6 indicates an outlet connection pipe having one end connected to the loop pipe 4. The outlet connection pipe 6 penetrates the hermetically sealed container 10 such that the outlet connection pipe 6 extends out of the hermetically sealed container 10.

The operation of the conventional linear compressor with the above-stated construction will now be described.

As the linear motor 20 is operated, the magnet 25 is linearly reciprocated by means of a magnetic field generated around the coil 23. The reciprocating movement of the magnet 25 is transmitted to the piston 30 via the magnet frame 27. As a result, the piston 30 is continuously reciprocated between the valve body 45 of the discharging unit 40 and the back cover 15.

When the piston 30 is moved forward, i.e., toward the discharging unit 40, the inlet valve 35 is closed due to the difference in pressure between the fluid flow channel 33 and the compression chamber C. As a result, the fluid in the compression chamber C is compressed, and is then discharged through the discharging unit 40. The fluid outside the back cover 15 is introduced through the fluid inlet port 16.

When the piston 30 is moved backward, on the other hand, the inlet valve 35 is opened due to the difference in pressure between the fluid- flow channel 33 and the compression chamber C. As a result, the fluid in the fluid flow channel 33 of the piston 30 is introduced into the compression chamber C through the inlet holes 34. As the piston 30 is subsequently moved forward, the fluid in the compression chamber C is compressed, and is then discharged. The above-described operation is repetitively carried out.

In the above-mentioned conventional linear compressor, however, not only operating components necessary to compress fluid but also supporting components necessary to support the operating components and vibration-absorbing components necessary to absorb vibrations generated from the operating components are disposed in the hermetically sealed container 10. As a result, it is difficult to miniaturize the linear compressor, and thus the linear compressor is designed within the limits.

US 3,573,514 A which is considered the closest prior art, describes a reciprocating motor with excursion multiplication. A motor having a laminated E-core structure is enclosed in an outer housing of a hollow cylindrical cross section and having a cover mounted over the end of the housing. An intake cube is provided for admitting gases to the compressor and an exhaust tube for permitting the egress of gases compressed by the motor is mounted within the housing. The housing is gastight with the tubes and passing into the housing through openings in the cover and passing through grommets or hermetic seals, in order to prevent the leakage of gases from the housing. A compressor motor is mounted in a second or inner housing or frame, which is supported at its lower and upper ends within the outer housing by pairs of resilient damper springs, respectively. These damper springs permit the inner housing to float with respect to the outer housing and act to isolate vibrations between the motor and the outer housing. In order to drive the motor, a winding is placed around inner leg of the core and is provided with AC signals over a pair of leads connected to a pair of terminals, which pass through the grommet.

US 2002/0028143 A1 describes a linear compressor. A linear compressor comprises damping means, which is constituted by a dynamic damper. The dynamic damper is designed to damp vibrations of a fixed member caused by reciprocally linear motion of a piston unit. The dynamic damper includes a retaining member fixedly connected to the fixed member through the casing member, a weight member having a center axis and axially movably supported by the retaining member to resonate with the vibrations of the fixed member, and a resilient member intervening between the retaining member and the weight member to have the retaining member and the weight member resiliently connected with each other.

US 2001/0015068 A1 describes a pulse tube refrigerator. A vibration absorbing unit for reducing vibration occurred by the operation of an operating motor is combined to the center lower side surface of a sealed casing containing the motor so as to be placed inside of a reservoir. The vibration absorbing unit comprises a fixed shaft fixedly combined to the sealed casing so as to be placed on the same line of the vibration direction of the operating motor, a plurality of plate springs combined to the end of the fixed shaft, and a mass body fixedly combined between the plate springs. A vibration transmitted to the sealed casing of the linear motion of a piston is transmitted to the vibration absorbing unit installed inside of the sealed casing. The vibration of the vibration absorbing unit has a second mode against the vibration mode occurred from the sealed casing, and the vibration of the sealed casing is reduced.

JP 2002-115653 A describes a compressor. A driving mechanism is installed in the body case of a compressor body. A damping member is installed on the outside of the body. The damping member is formed of a plate spring and a weight attached to the plate spring. A plurality of detachable projected pieces with different masses are provided on the weight. By cutting out the projected pieces by a necessary amount manually or with a tool, the mass of the weight can be fine-adjusted to suppress the vibration thereof in X-axial direction. A thin wall part to be easily broken out is formed at the base parts of the projected pieces so that the projected pieces can be broken out easily.

EP 0 745 773 A1 describes a vibrating compressor. A support spring is provided between a flange portion of a bobbin and an inner cylinder of a vibrating compressor. A support spring is provided between a terminal provided on a flange portion of the bobbin via an insulating member, and a washer terminal provided on a cap-shaped cover plate via an insulating base. Both ends of the support spring are electrically connected by surface contact to the terminal and the washer terminal. In this way, the piston is supported by a pair of upper and lower support springs.

US 3,385,542 A describes a motor compressor unit with spring sustention. A capsule contains a motor-compressor unit housed therein hermetically sealed and having a motor shaft axis A, which extends vertically. The motor-compressor unit is suspended in the capsule by a suspension system comprising four spring assemblies or mounts all having the same construction. Each mount comprises a buffer spring, which is a conically wound coil spring. Each spring has the coils or helical convolutions reducing in diameter from one coil to the other in a direction from one end toward the other or opposite end. The four spring assemblies are located at four corners of a rectangle which approximately follows the shape of a lamination pack of the stator of the motor, the longer sides of the rectangle run parallel with the cylinder axis while its shorter sides extend perpendicular thereto. The imaginary extensions of the axis of the buffer spring extend approximately along the diagonals of the rectangle and intersect at the axis A of the motor shaft.

### SUMMARY OF THE INVENTION

It is an object of the present invention to provide a linear compressor according to claim 1 wherein a discharging unit and vibration-absorbing components are disposed outside a hermetically sealed container to reduce the size of the hermetically sealed container, whereby the linear compressor is miniaturized, and the linear compressor is designed without limits.

This object is solved by the linear compressor according to claim 1. Further advantages, refinements and embodiments of the invention are described in the respective sub-claims.

A linear compressor comprises: a hermetically sealed container having an inlet port and an outlet port formed therein; a linear motor fixed to the inside of the hermetically sealed container for generating a linear moving force; a cylinder fixed to the inside of the hermetically sealed container adjacent to the outlet port; a discharging unit assembly disposed in front of the outlet port at the outside of the hermetically sealed container such that a fluid compressed in the cylinder is discharged through the discharging unit assembly; a piston connected to the linear motor such that the piston is linearly reciprocated in the cylinder for compressing a fluid introduced into the cylinder; main springs connected to the front and rear sides of the piston, respectively, while being supported inside the hermetically sealed container for providing elastic forces to facilitate the reciprocating movement of the piston when the piston is reciprocated; and a shock-absorbing support unit disposed at the outside of the hermetically sealed container for supporting the hermitically sealed container such that shocks applied to the hermitically sealed container are absorbed by means of shock-absorbing support unit.

Preferably, the shock-absorbing support unit comprises: a container-supporting stand to support the hermetically sealed container at the outside of the hermetically sealed container; and shock-absorbing means disposed between the container-supporting stand and the hermetically sealed container for performing shock-absorbing operations.

Preferably, the inlet port is disposed at the rear end of the hermitically sealed container such that an inlet pipe is inserted through the inlet port, and the outlet assembly is disposed at the front end of the hermetically sealed container, and the linear compressor further comprises: spring seats formed around the inlet port of the hermetically sealed container and at the discharging unit assembly, respectively, such that the shock-absorbing means are mounted to the spring seats, respectively.

Preferably, the discharging unit assembly comprises: an outlet cover mounted to the outside of the hermetically sealed container for absorbing shocks generated from the fluid discharged through the outlet port; an outlet valve disposed in the outlet cover for opening and closing the outlet port; and an outlet spring supported against the outlet cover for providing an elastic force to the outlet valve.

Preferably, the linear compressor further comprises: sealing means disposed, at the outlet port side of the hermetically sealed container, between the cylinder and the hermetically sealed container and between the outlet cover and the hermetically sealed container.

Preferably, the piston is provided at the rear part thereof with a spring-supporting body such that the main springs are attached to the front and rear sides of the spring-supporting body.

Preferably, the hermetically sealed container is provided at the inside thereof with spring-supporting blocks such that one end of each of the main springs is supported against the corresponding one of the spring-supporting blocks.

Preferably, the linear compressor further comprises: a silencer disposed at the rear of the piston for reducing inlet noise.

The shock-absorbing means are disposed at the front and rear ends of the hermetically sealed container, respectively, for absorbing vibrations generated in the direction in which the linear motor is operated. The container-supporting stand comprises: a horizontal supporting stand disposed horizontally in the longitudinal direction of the hermetically sealed container; and vertical supporting stands connected to both ends of the horizontal supporting stand while being perpendicular to the horizontal supporting stand for supporting the shock-absorbing means.

The shock-absorbing means are disposed at the front and rear ends of the hermetically sealed container, respectively, for absorbing vibrations generated in the direction in which the linear motor is operated, and the shock-absorbing means are further disposed at the outer circumference of the hermetically sealed container while being diagonally opposite to each other for absorbing vibrations generated in the radial direction of the hermetically sealed container. The shock-absorbing means comprise: shock-absorbing springs disposed at the front and rear ends of the hermetically sealed container, respectively; and vibration-absorbing members disposed at the upper and lower sides of the hermetically sealed container, respectively.

There is provided a linear compressor comprising: a hermetically sealed container having an inlet port and an outlet port formed at both ends thereof, the hermetically sealed container containing a compression unit to compress and discharge a fluid therein, the compression unit comprising a linear motor, a cylinder, and a piston disposed in the cylinder such that the piston is linearly reciprocated in the cylinder by means of the linear motor; a discharging unit assembly disposed in front of the outlet port at the outside of the hermetically sealed container such that a fluid compressed in the cylinder is discharged through the discharging unit assembly; a container-supporting stand to support the hermetically sealed container at the outside of the hermetically sealed container; and shock-absorbing means disposed between the container-supporting stand and the hermetically sealed container for performing shock-absorbing operations.

In the linear compressor according to the present invention, the discharging unit assembly and the shock-absorbing support unit are disposed at the outside of the hermetically sealed container to reduce the size of the hermetically sealed container. Consequently, the present invention has the effect that the linear compressor is miniaturized, and the linear compressor is designed without limits.

According to the supporting structure of the hermetically sealed container according to the present invention, vibrations generated in the direction in which the linear motor is operated and vibrations generated in the radial and rotating directions of the hermetically sealed container are effectively absorbed. Consequently, the present invention has the effect of supporting the hermetically sealed container while absorbing shocks applied to hermetically sealed container.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a longitudinal sectional view showing a conventional linear compressor;
Fig. 2 is a longitudinal sectional view showing a linear compressor according to the present invention;
Fig. 3 is a sectional view showing the linear compressor according to the present invention with a sealing structure of a discharging unit;
Fig. 4 is a perspective view showing the linear compressor with a supporting structure according to a first preferred embodiment of the present invention;
Fig. 5 is a perspective view showing the linear compressor with a supporting structure according to a second preferred embodiment of the present invention; and
Fig. 6 is a perspective view showing the linear compressor with a supporting structure according to a third preferred embodiment of the present invention.

### DESCRIPTION OF THE PREFERRED EMBODIMENTS

Now, preferred embodiments of the present invention will be described in detail with reference to the accompanying drawings.

It should be understood that linear compressors according to numerous preferred embodiments of the present invention may be proposed, although only the most preferred embodiments of the present invention will be hereinafter described.

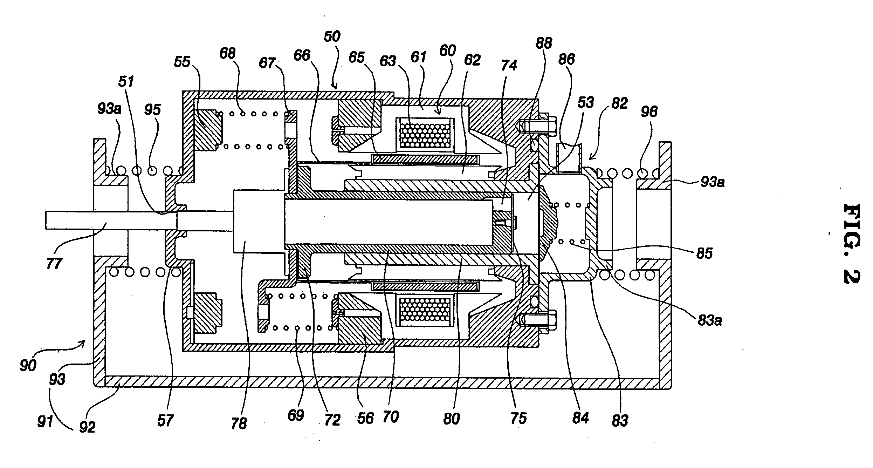

Fig. 2 is a longitudinal sectional view showing a linear compressor according to a preferred embodiment of the present invention.

As shown in Fig. 2, the linear compressor according to the present invention includes: a hermetically sealed container 50 having an inlet port 51 and an outlet port 53 formed therein; a linear motor 60 fixed to the inside of the hermetically sealed container 50 for generating a linear moving force; a cylinder 80 fixed to the inside of the hermetically sealed container 50 adjacent to the outlet port 53; a discharging unit assembly 82 disposed in front of the outlet port 53 at the outside of the hermetically sealed container 50 such that a fluid compressed in the cylinder 80 is discharged through the discharging unit assembly 82; a piston 70 connected to the linear motor 60 such that the piston 70 is linearly reciprocated in the cylinder 80 for compressing a fluid introduced into the cylinder; main springs 68 and 69 connected to the front and rear sides of the piston 70, respectively, while being supported inside the hermetically sealed container 50 for providing elastic forces to facilitate the reciprocating movement of the piston when the piston is reciprocated; and a shock-absorbing support unit 90 disposed at the outside of the hermetically sealed container 50 for supporting the hermitically sealed container 50 such that shocks applied to the hermitically sealed container 50 are absorbed by means of the shock-absorbing support unit 90.

The hermitically sealed container 50 is formed in the shape of a cylinder. The inlet port 51 is disposed at the rear end of the hermitically sealed container 50 such that an inlet pipe 77 is inserted through the inlet port 51. The outlet assembly 82 is disposed at the front end of the hermetically sealed container 50.

The linear motor 60 comprises a stator and a mover. The stator comprises: a laminated outer core 61; a laminated inner core 62 disposed such that the inner core 62 is spaced apart from the outer core 61 by a prescribed distance; and a coil 63 wound on the outer core 61 for generating a magnetic field. The mover comprises: a magnet 65 disposed between the outer core 61 and the inner core 62 such that the magnet 65 is linearly moved by a magnetic force created around the coil 63; and a magnet frame 66 connected to the piston 70 for transmitting a linear moving force to the piston 70. The magnet 65 is fixed to the magnet frame 66.

The piston 70 is provided at the rear part thereof with a flange 72, which is fixed to the magnet frame 66. To the flange 72 is attached a spring-supporting body 67, at the front and rear sides of which are disposed the main springs 68 and 69 to provide elastic forces to the piston such that vibrations are successively applied to the piston in both directions.

Inside the hermetically sealed container 50 are spring-supporting blocks 55 and 56. The spring-supporting block 55 supports one end of the main spring 68, and the spring-supporting block 56 supports one end of the main spring 69.

At the rear of the piston 70 is disposed a silencer 78, which is connected to the inlet pipe 77 for reducing inlet noise.

At the front end of the piston 70 are formed a plurality of inlet holes 74, which are opened and closed by means of a inlet valve 74 attached to the front end of the piston 70.

The discharging unit assembly 82 comprises: an outlet cover 83 mounted to the outside of the hermetically sealed container 50 by means of bolts for absorbing shocks generated from the fluid discharged through the outlet port 53 and allowing the fluid having been discharged through the outlet port 53 to be discharged through an outlet pipe 86; an outlet valve 84 disposed at the exit of the cylinder 80 in the outlet cover 83 for opening and closing the outlet port 53; and an outlet spring 85 supported against the outlet cover 83 for providing an elastic force to the outlet valve 84.

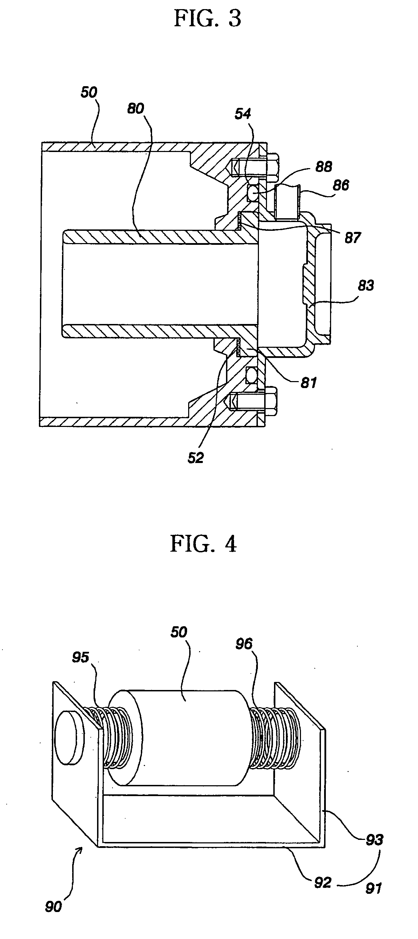

A sealing structure of the discharging unit assembly 82 will be described hereinafter with reference to Fig. 3. Between the outlet port 53 and the cylinder 80 is disposed a sealing member to prevent leakage of fluid from the inside of the hermetically sealed container 50, and between the outer surface of the hermetically sealed container 50 and the flange of the outlet cover 83 is disposed another sealing member to prevent leakage of fluid from the outside of the hermetically sealed container 50. In other words, the discharging unit assembly 82 is a double-sealed structure.

Specifically, a ring-shaped gasket 87 is disposed, at the outlet port side of the hermetically sealed container 50, between an inner step groove part 52 of the hermetically sealed container 50 and an extension 81 of the cylinder 50, and an O-ring 88 is disposed, at the outlet port side of the hermetically sealed container 50, between a ring groove 54 of the hermetically sealed container 50 and the flange of the outlet cover 83.

Various supporting structures of the hermetically sealed container 50 with the above-described construction will now be described in detail with reference to Figs. 4 to 6.

First, a supporting structure of the hermetically sealed container 50 according to a first preferred embodiment of the present invention will be described with reference to Fig. 4. As shown in Fig. 4, the shock-absorbing support unit 90 comprises: a container-supporting stand 91 to support the hermetically sealed container 50 at the outside of the hermetically sealed container 50, the container-supporting stand 91 being formed in the shape of a "["; and shock-absorbing springs 95 and 96 disposed between the container-supporting stand 91 and both ends of the hermetically sealed container 50 for performing shock-absorbing operations.

The container-supporting stand 91 comprises: a horizontal supporting stand 92 disposed horizontally in the longitudinal direction of the hermetically sealed container 50; and vertical supporting stands 93 connected to both ends of the horizontal supporting stand 92 while being perpendicular to the horizontal supporting stand 92 for supporting the shock-absorbing springs 95 and 96.

The shock-absorbing springs 95 and 96 are disposed at the front and rear ends of the hermetically sealed container 50, respectively, for absorbing vibrations generated in the direction in which the linear motor 60 and the piston 70 are moved. A plurality of shock-absorbing springs 95 and 96 may be disposed at the front and rear ends of the hermetically sealed container 50, respectively.

Around the inlet port 51 of the hermetically sealed container 50 and at the outlet cover 83 of the discharging unit assembly 82 are formed spring seats 57 and 83a (Fig. 2), to which the shock-absorbing springs 95 and 96 are mounted. The vertical supporting stands 93 have openings formed therein, respectively. Around the openings of the vertical supporting stands 93 are formed spring seats 93a, to which the shock-absorbing springs 95 and 96 are mounted.

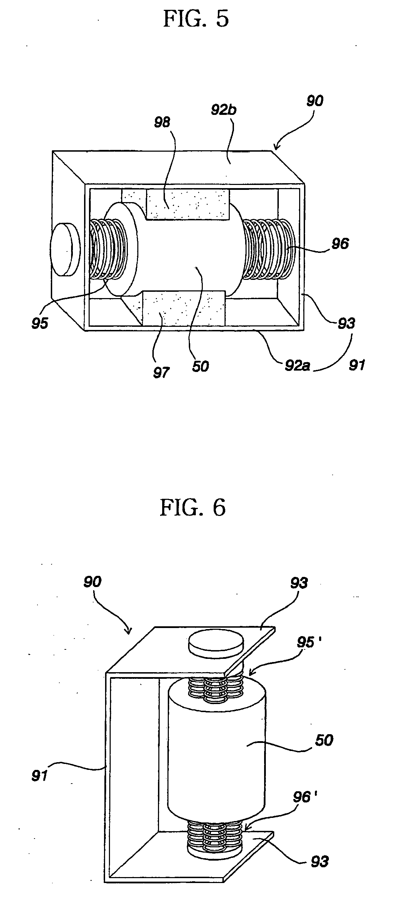

Another supporting structure of the hermetically sealed container 50 according to a second preferred embodiment of the present invention will be described with reference to Fig. 5. In the supporting structure according to the first preferred embodiment of the present invention shown in Fig. 4, the shock-absorbing springs 95 and 96 are disposed at the front and rear ends of the hermetically sealed container 50 for absorbing vibrations generated in the direction in which the linear motor 60 is operated. In the supporting structure according to the second preferred embodiment of the present invention shown in Fig. 5, vibration-absorbing members 97 and 98 are attached to the outer circumference of the hermetically sealed container 50 while being diagonally opposite to each other for absorbing vibrations generated in the radial direction of the hermetically sealed container 50.

The vibration-absorbing members 97 and 98 may be made of a material having vibration-absorbing ability, such as a spring or a sponge. Preferably, the vibration-absorbing members 97 and 98 are disposed at the upper and lower sides of the hermetically sealed container 50, respectively.

The container-supporting stand 91 comprises: horizontal supporting stands 92a and 92b disposed above and below the hermetically sealed container 50 while the horizontal supporting stands 92a and 92b are horizontally arranged in parallel with each other for supporting the vibration-absorbing members 97 and 98; and vertical supporting stands 93 connected to both ends of the horizontal supporting stands 92a and 92b while being perpendicular to the horizontal supporting stands 92a and 92b for supporting the shock-absorbing springs 95 and 96.

In the supporting structure with the above-stated construction according to the second preferred embodiment of the present invention, not only vibrations generated in the direction in which the linear motor is operated are absorbed by means of the shock-absorbing springs 95 and 96, but also vibrations generated in the radial direction of the hermetically sealed container 50 are absorbed by means of the vibration-absorbing members 97 and 98.

Yet another supporting structure of the hermetically sealed container 50 according to a third preferred embodiment of the present invention will be described with reference to Fig. 6. In the supporting structures according to the first and second preferred embodiments of the present invention shown in Figs. 4 and 5, a shock-absorbing spring 95 is disposed at the front end of the hermetically sealed container 50 and another shock-absorbing spring 96 is disposed at the rear end of the hermetically sealed container 50 for absorbing vibrations generated in the direction in which the linear motor 60 is operated. In the supporting structure according to the third preferred embodiment of the present invention shown in Fig. 6, a plurality of shock-absorbing springs 95' and 96' are attached to at least one of the front and rear ends of the hermetically sealed container 50.

Preferably, the shock-absorbing springs 95' and 96' are disposed at the front and rear ends of the hermetically sealed container 50, respectively, such that the shock-absorbing springs 95' are spaced apart from each other by 120 degrees, and the shock-absorbing springs 96' are spaced apart from each other by 120 degrees. The construction of the container-supporting stand 91 according to the third preferred embodiment of the present invention is identical to that of the first preferred embodiment of the present invention except that the compressor is vertically mounted.

In the supporting structure with the above-stated construction according to the third preferred embodiment of the present invention, not only vibrations generated in the direction in which the linear motor 60 is operated are reduced, but also movement of the hermetically sealed container 50 in the rotating direction thereof, i.e., vibrations of the hermetically sealed container 50 is reduced.

The operation of the linear compressor with the above-stated construction according to the present invention will now be described.

As the linear motor 60 is operated, the magnet 65 is linearly reciprocated by means of a magnetic field generated around the coil 63. The reciprocating movement of the magnet 65 is transmitted to the piston 70 via the magnet frame 66. As a result, the piston 70 is continuously reciprocated in the cylinder 80 for compressing the fluid introduced into the cylinder 80 and discharging the compressed fluid.

When the piston 70 is moved forward, i.e., toward the discharging unit assembly 82, the inlet valve 75 is closed, and thus the fluid in the cylinder 80 is compressed. At this time, the outlet valve 84 is opened, and then the fluid is discharged out of the linear compressor through the outlet cover 83 and the outlet pipe 86.

When the piston 70 is moved backward, on the other hand, the inlet valve 75 is opened, and thus the fluid introduced into the piston 70 is guided into the cylinder 80 through the inlet holes 74. As the piston 30 is subsequently moved forward, the fluid in the cylinder 80 is compressed, and is then discharged. The above-described operation is repetitively carried out.

According to the present invention, the gasket 87 and the O-ring 88 are disposed at the outlet port 53 of the hermetically sealed container 50. In other words, the hermetically sealed container 50 has a double sealing structure. Consequently, fluid, such as refrigerant gas, is prevented from leaking without the provision of an additional outer case at the outside of the hermetically sealed container 50.

Also, the shock-absorbing support unit 90 is disposed at the outside of the hermetically sealed container 50 such that vibrations generated in the direction in which the linear motor 60 and the piston 70 are moved and vibrations generated in the radial and rotating directions of the hermetically sealed container 50 are effectively absorbed by means of the shock-absorbing support unit 90 when the compressor is operated. Consequently, the inner structure of the hermetically sealed container 50 is simplified while a sufficient shock-absorbing support structure is obtained, whereby the linear compressor is miniaturized.

As apparent from the above description, the present invention provides a linear compressor wherein a discharging unit assembly and a shock-absorbing support unit are disposed at the outside of a hermetically sealed container to reduce the size of the hermetically sealed container. Consequently, the present invention has the effect that the linear compressor is miniaturized, and the linear compressor is designed without limits.

According to the supporting structure of the hermetically sealed container according to the present invention, vibrations generated in the direction in which the linear motor is operated and vibrations generated in the radial and rotating directions of the hermetically sealed container are effectively absorbed. Consequently, the present invention has the effect of supporting the hermetically sealed container while absorbing shocks applied to hermetically sealed container.

## Claims

1. A linear compressor comprising:
a hermetically sealed container (50) having an inlet port (51) and an outlet port (53) formed therein;
a linear motor (60) fixed to the inside of the hermetically sealed container (50) for generating a linear moving force;
a cylinder (80) fixed to the inside of the hermetically sealed container (50) adjacent to the outlet port (53);
a discharging unit assembly (82) disposed in front of the outlet port (53) at the outside of the hermetically sealed container (50) such that a fluid compressed in the cylinder (80) is discharged through the discharging unit assembly (82);
a piston (70) connected to the linear motor (60) such that the piston (70) is linearly reciprocated in the cylinder (80) for compressing fluid introduced into the cylinder (80);
main springs (68, 69) connected to the front and rear sides of a spring supporting body(67), respectively, while being supported inside the hermetically sealed container (50) for providing elastic forces to facilitate the reciprocating movement of the piston (70) when the piston (70) is reciprocated; and
a shock-absorbing support unit (90) disposed at the outside of the hermetically sealed container (50) for supporting the hermitically sealed container (50) such that shocks applied to the hermitically sealed container (50) are absorbed by means of the shock-absorbing support unit (90),
**characterized in that** the shock-absorbing support unit (90) comprises:
a container-supporting stand (91) to support the hermetically sealed container (50) at the outside of the hermetically sealed container (50), the container-supporting stand (91) including a horizontal supporting stand (92) disposed horizontally in the longitudinal direction of the hermetically sealed container (50) and vertical supporting stands (93) connected to both ends of the horizontal supporting stand (92) while being perpendicular to the horizontal supporting stand (92); and
shock-absorbing means (95, 96 disposed between the vertical supporting stands(93) and front and rear ends of the hermetically sealed container(50) for absorbing vibrations generated in a direction in which the linear motor (60) is operated.

2. The compressor as set forth in claim 1, wherein shock-absorbing means (97, 98) are further disposed at the outer circumference of the hermetically sealed container (50) while being diagonally opposite to each other for absorbing vibrations generated in the radial direction of the hermetically sealed container (50).

3. The compressor as set forth in claim 2, wherein the shock-absorbing means (95, 96, 97, 98) comprise:
shock-absorbing springs (95, 96) disposed at the front and rear ends of the hermetically sealed container (50), respectively; and
vibration-absorbing members (97, 98) disposed at the upper and lower sides of the hermetically sealed container (50), respectively.

4. The compressor as set forth in claim 1, wherein the inlet port (51) is disposed at the rear end of the hermitically sealed container (50) such that an inlet pipe (77) is inserted through the inlet port (51), and an outlet assembly is disposed at the front end of the hermetically sealed container (50), the compressor further comprising:
spring seats (57, 83a) formed around the inlet port (51) of the hermetically sealed container (50) and at the discharging unit assembly (82), respectively, such that the shock-absorbing means (95, 96) are mounted to the spring seats (57, 83a), respectively.

5. The compressor as set forth in claim 1, wherein the discharging unit assembly (82) comprises:
an outlet cover (83) mounted to the outside of the hermetically sealed container (50) for absorbing shocks generated from the fluid discharged through the outlet port (53);
an outlet valve (84) disposed in the outlet cover (83) for opening and closing the outlet port (53); and
an outlet spring (85) supported against the outlet cover (83) for providing an elastic force to the outlet valve (84).

6. The compressor as set forth in claim 5, further comprising: sealing means (87, 88) disposed, at the outlet port (53) side of the hermetically sealed container (50), between the cylinder (80) and the hermetically sealed container (50) and between the outlet cover (83) and the hermetically sealed container (50).

## Patentansprüche

1. Linearkompressor, der umfasst:
einen hermetisch verschlossenen Behälter (50), in dem eine Einlassöffnung (51) und eine Auslassöffnung (53) geformt sind;
einen Linearmotor (60), der an der Innenseite des hermetisch verschlossenen Behälters (50) befestigt ist, zum Erzeugen einer linearen Antriebskraft;
einen Zylinder (80), der an der Innenseite des hermetisch verschlossenen Behälters (50) in der Nähe der Auslassöffnung (53) befestigt ist;
eine Ablasseinheitsanordnung (82), die vor der Auslassöffnung (53) an der Außenseite des hermetisch verschlossenen Behälters (50) angeordnet ist, so dass ein in dem Zylinder (80) komprimiertes Fluid durch die Ablasseinheitsanordnung (82) abgelassen wird;
einen Kolben (70), der mit dem Linearmotor (60) verbunden ist, so dass der Kolben in dem Zylinder (80) zum Komprimieren des Fluids, das in den Zylinder (80) eingeleitet wird, geradlinig hin und her bewegt wird;
Hauptfedern (68, 69), die mit der Vorder- bzw. Rückseite eines Federlagerkörpers (67) verbunden sind, während sie innerhalb des hermetisch verschlossenen Behälters (50) gelagert sind, um Federkräfte zur Verfügung zu stellen, um die Hin- und Herbewegung des Kolbens (70) zu erleichtern, wenn der Kolben (70) hin und her bewegt wird; und
eine stoßdämpfende Lagereinheit (90), die an der Außenseite des hermetisch verschlossenen Behälters (50) angeordnet ist, um den hermetisch verschlossenen Behälter (50) zu lagern, so dass Stöße, die auf den hermetisch verschlossenen Behälter (50) ausgeübt werden, mit Hilfe der stoßdämpfenden Lagereinheit (90) gedämpft werden,
**dadurch gekennzeichnet, dass** die stoßdämpfende Lagereinheit (90) umfasst:
einen den Behälter lagernden Ständer (91), um den hermetisch verschlossenen Behälter (50) an der Außenseite des hermetisch verschlossenen Behälters (50) zu lagern, wobei der den Behälter lagernde Ständer (90) einen horizontalen Lagerständer (92), der horizontal in der Längsrichtung des hermetisch verschlossenen Behälters (50) angeordnet ist, und vertikale Lagerständer (93), die mit beiden Enden des horizontalen Lagerständers (92) verbunden sind, während sie senkrecht zu dem horizontalen Lagerständer (92) sind, umfasst; und
stoßdämpfende Mittel (95, 96), die zwischen den vertikalen Lagerständern (93) und dem vorderen und dem hinteren Ende des hermetisch verschlossenen Behälters (50) zum Dämpfen von Schwingungen, die in einer Richtung erzeugt werden, in der der Linearmotor (60) betrieben wird, angeordnet sind.

2. Kompressor nach Anspruch 1, wobei ferner stoßdämpfende Mittel (97, 98) an dem äußeren Umfang des hermetisch verschlossenen Behälters (50) so angeordnet sind, dass sie diagonal einander gegenüberliegen, um Schwingungen, die in der radialen Richtung des hermetisch verschlossenen Behälters (50) erzeugt werden, zu dämpfen.

3. Kompressor nach Anspruch 1, wobei die stoßdämpfenden Mittel (95, 96, 97, 98) umfassen:
stoßdämpfende Federn (95, 96), die an dem vorderen bzw. hinteren Ende des hermetisch verschlossenen Behälters (50) angeordnet sind; und
schwingungsdämpfende Elemente (97, 98), die an der Ober- bzw. Unterseite des hermetisch verschlossenen Behälters (50) angeordnet sind.

4. Kompressor nach Anspruch 1, wobei die Einlassöffnung (51) an dem hinteren Ende des hermetisch verschlossenen Behälters (50) so angeordnet ist, dass ein Einlassrohr (77) durch die Einlassöffnung (51) eingesetzt ist, und eine Auslassanordnung an dem vorderen Ende des hermetisch verschlossenen Behälters (50) angeordnet ist, wobei der Kompressor ferner umfasst: Federaufnahmen (57, 83a), die um die Einlassöffnung (51) des hermetisch verschlossenen Behälters (50) bzw. an der Auslasseinheitsanordnung gebildet sind, so dass die stoßdämpfenden Mittel (95, 96) an die jeweiligen Federaufnahmen (57, 83a) montiert sind.

5. Kompressor nach Anspruch 1, wobei die Auslasseinheitsanordnung (82) umfasst:
eine Auslassabdeckung (83), die an die Außenseite des hermetisch verschlossenen Behälters (50) montiert ist, zum Dämpfen von Stößen, die durch das Fluid erzeugt werden, das durch die Auslassöffnung (53) abgelassen wird;
ein Auslassventil (84), das in der Auslassabdeckung (83) angeordnet ist, zum Öffnen und Schließen der Auslassöffnung (53); und
eine Auslassfeder (85), die gegen die Auslassabdeckung (83) gelagert ist, um eine Federkraft für das Auslassventil (84) zur Verfügung zu stellen.

6. Kompressor nach Anspruch 5, der ferner umfasst: Verschlussmittel (87, 88), die an der Seite der Auslassöffnung (53) des hermetisch verschlossenen Behälters (50), zwischen dem Zylinder und dem hermetisch verschlossenen Behälter (50) und zwischen der Auslassabdeckung (83) und dem hermetisch verschlossenen Behälter (50) angeordnet sind.

## Revendications

1. Compresseur linéaire comprenant :
un conteneur hermétiquement scellé (50) ayant un orifice d'entrée (51) et un orifice de sortie (53) formés dans celui-ci ;
un moteur linéaire (60) fixé sur l'intérieur du conteneur hermétiquement scellé (50) pour générer une force motrice linéaire ;
un cylindre (80) fixé sur l'intérieur du conteneur hermétiquement scellé (50) adjacent à l'orifice de sortie (53) ;
un ensemble formant unité de décharge (82) disposé en face de l'orifice de sortie (53) à l'extérieur du conteneur hermétiquement scellé (50) de telle façon qu'un fluide comprimé dans le cylindre (80) est déchargé via l'ensemble formant unité de décharge (82) ;
un piston (70) connecté au moteur linéaire (60) de telle façon que le piston (70) est déplacé linéairement en va-et-vient dans le cylindre (80) pour comprimer un fluide introduit dans le cylindre (80) ;
des ressorts principaux (68, 69) connectés aux côtés avant et arrière d'un corps de support de ressort (67), respectivement, tout en étant supportés à l'intérieur du conteneur hermétiquement scellé (50) pour exercer des forces élastiques afin de faciliter le mouvement en va-et-vient du piston (70) lorsque le piston (70) est déplacé en va-et-vient ; et
une unité formant support d'absorption de choc (90) disposée à l'extérieur du conteneur hermétiquement scellé (50) pour supporter le conteneur hermétiquement scellé (50) de telle façon que des chocs appliqués au conteneur hermétiquement scellé (50) sont absorbés au moyen de l'unité formant support d'absorption de choc (90),
**caractérisé en ce que** l'unité formant support d'absorption de choc (90) comprend :
un socle de support de conteneur (91) pour supporter le conteneur hermétiquement scellé (50) à l'extérieur du conteneur hermétiquement scellé (50), le socle de support de conteneur (91) incluant un socle de support horizontal (92) disposé horizontalement dans la direction longitudinale du conteneur hermétiquement scellé (50) et des socles de support verticaux (93) connectés aux deux extrémités du socle de support horizontal (92) tout en étant perpendiculaires au socle de support horizontal (92) ; et
des moyens d'absorption de choc (95, 96) disposés entre les socles de support verticaux (93) et les extrémités avant et arrière du conteneur hermétiquement scellé (50) pour absorber des vibrations générées dans une direction dans laquelle le moteur linéaire (60) est en fonctionnement.

2. Compresseur selon la revendication 1, dans lequel des moyens d'absorption de choc (97, 98) sont en outre disposés à la circonférence extérieure du conteneur hermétiquement scellé (50) tout en étant diagonalement à l'opposé l'un de l'autre pour absorber des vibrations générées dans la direction radiale du conteneur hermétiquement scellé (50).

3. Compresseur selon la revendication 2, dans lequel les moyens d'absorption de choc (95, 96, 97, 98) comprennent :
des ressorts d'absorption de choc (95, 96) disposés aux extrémités avant et arrière du conteneur hermétiquement scellé (50), respectivement ; et
des éléments d'absorption de vibrations (97, 98) disposés sur les côtés supérieur et inférieur du conteneur hermétiquement scellé (50), respectivement.

4. Compresseur selon la revendication 1, dans lequel l'orifice d'entrée (51) est disposé à l'extrémité arrière du conteneur hermétiquement scellé (50) de telle façon qu'un tube d'entrée (77) est inséré via l'orifice d'entrée (51), et un ensemble de sortie est disposé à l'extrémité avant du conteneur hermétiquement scellé (50), le compresseur incluant en outre des sièges de ressort (57, 83a) formés autour de l'orifice d'entrée (51) du conteneur hermétiquement scellé (50) et au niveau de l'ensemble formant unité de décharge (82), respectivement, de telle façon que les moyens d'absorption de choc (95, 96) sont montés sur les sièges de ressort (57, 83a), respectivement.

5. Compresseur selon la revendication 1, dans lequel l'ensemble formant unité de décharge (82) comprend :
un couvercle de sortie (83) monté sur l'extérieur du conteneur hermétiquement scellé (50) pour absorber des chocs générés par le fluide déchargé via l'orifice de sortie (53) ;
une valve de sortie (84) disposée dans le couvercle de sortie (83) pour ouvrir et fermer l'orifice de sortie (53) ; et
un ressort de sortie (85) supporté contre le couvercle de sortie (83) pour exercer une force élastique sur la valve de sortie (84).

6. Compresseur selon la revendication 5, comprenant en outre : des moyens de scellement (87, 88) disposés, du côté du conteneur hermétiquement scellé (50) vers l'orifice de sortie (53), entre le cylindre (80) et le conteneur hermétiquement scellé (50), et entre le couvercle de sortie (83) et le conteneur hermétiquement scellé (50).
